# EUROPÄISCHE PATENTSCHRIFT

(11) **EP 1 424 266 B1**
(45) Veröffentlichungstag und Bekanntmachung des Hinweises auf die Patenterteilung: **22.12.2010**
(21) Anmeldenummer: 03026460.0
(22) Anmeldetag: 20.11.2003
(51) Int. Cl.: B62D 25/08

(54) **Heckseitige Unterbaustruktur sowie heckseitiges Aufprallbegrenzungssystem für ein Kraftfahrzeug**
Rearward underbody structure and rear-end crash limiting system for a motor vehicle .
Structure arrière de dessous de caisse et limitateur d'impact en cas d'accident pour véhicules automobiles

(30) Priorität: 29.11.2002 DE 10255968
(43) Veröffentlichungstag der Anmeldung: 02.06.2004
(73) Patentinhaber: GM Global Technology Operations, Inc., Detroit, MI 48265-3000 (US)
(72) Erfinder: Bechtold, Ralf-Dieter, 55278 Weinolsheim (DE); Griebenow, Bernd, 65468 Trebur (DE); Ringel, Franz-Josef, 55129 Mainz (DE); Wanke, Thomas, 55239 Gau-Odernheim (DE)
(74) Vertreter: Strauss, Peter

(56) Entgegenhaltungen:
- EP-A- 0 945 328
- DE-A- 2 144 393
- DE-A- 4 115 812
- DE-C- 499 020
- DE-C1- 19 615 985
- JP-A- 2002 321 642
- US-B1- 6 206 461

## Beschreibung

Die vorliegende Erfindung betrifft eine heckseitige Unterbaustruktur für ein Kraftfahrzeug, insbesondere ein Personenkraftfahrzeug, nach dem Oberbegriff des Anspruchs 1, sowie ein heckseitiges Aufprallbegrenzungssystem für ein Kraftfahrzeug nach dem Oberbegriff des Anspruchs 12.

In der Praxis sind Fahrzeuge üblich, deren Unterbaustruktur zwei jeweils am linken bzw. rechten Rand des Fahrzeugs angeordnete Träger aufweist, die in Fahrtrichtung des Fahrzeugs ausgerichtet sind. Diese Längsträger tragen einen Großteil des Fahrzeuggewichts. Neben der Stützfunktion hat die Unterbaustruktur bzw. deren Längsträger eine zusätzliche Aufgabe: Sie dient im Zusammenspiel mit Aufprallbegrenzungssystemen wie z. B. Stoßfängern, Bumperquerträgern oder dergleichen im Falle eines Auffahrunfalls, bei welchem das Fahrzeug durch ein anderes Fahrzeug von hinten gerammt wird, als Garant dafür, dass ein bedeutender Anteil der Aufprallenergie absorbiert und zugleich die Verformung der Fahrgastzelle durch den Aufprall möglichst gering gehalten wird. Auf diese Weise trägt sie zur Sicherheit der Fahrgäste, insbesondere der Fahrgäste auf den Sitzen der Rückbänke, deutlich bei.

Neben der sich gegen die Längsträger der Unterbaustruktur abstützenden Aufprallbegrenzungssystemen als auch der Unterbaustruktur selbst ist auch der übliche Heckkofferraum in gewissem Rahmen geeignet, im Falle eines heckseitigen Auffahrunfalls einen Teil der Aufprallenergie zu absorbieren. Die nicht vom Heckkofferraum absorbierte Energie wird in die weiter vorne gelegene Karosserie eingeleitet und kann zur Verformung der Fahrgastzelle führen, was wiederum zu schweren Verletzungen der Fahrgäste führen kann. Bei einem Fahrzeug mit vergleichsweise kleinem Heckkofferraum, oder bei dem dieser ganz fehlt, wird die restliche Aufprallenergie, die nicht vom Aufprallbegrenzungssystem vernichtet wurde, unvermindert in die Unterbaustruktur und Fahrgastzelle eingeleitet.

Seit einiger Zeit schon gehen vermehrt Personenkraftfahrzeuge in Serie, die ohne den klassischen Heckkofferraum ausgestattet sind. Hierbei handelt es sich u. a. um Sportwagen, um sog. Vans, Kombis, aber auch um Großraumlimousinen, bei denen unter Verringerung des Platzes für einen herkömmlichen Kofferraum eine zusätzliche oder aber deutlich nach hinten verlagerte Sitzbank für Fahrgäste im Heckbereich angeordnet ist, also Fahrzeuge mit steiler Heckklappe und wenig Raum für ausladende Aufprallbegrenzungssysteme. Die Fahrgäste dieser Fahrzeuge sind im Falle eines Auffahrunfalls von hinten weit weniger geschützt, als dies beim herkömmlichen Fahrzeug der Fall ist.

Die US 6,206,461 B1 offenbart eine gattungsgemäße Unterbodenstruktur, bei dem sich ein Mittellängsträger an einem die beiden äußeren Längsträger verbindenden Querträger abstützt.

Daneben ist aus der JP 2002-321642 A Heckunterbaustruktur eines bekannt, bei welcher ein mittleres Unterbauteil eine Brücke zwischen einem Querträger und einen hinteren Endträger bildet, welcher die hinten liegenden Enden hinterer Seitenteile miteinander verbindet.

Vor diesem Hintergrund des Standes der Technik sowie seiner Nachteile ist es Aufgabe der vorliegenden Erfindung, eine heckseitige Unterbaustruktur für ein Kraftfahrzeug vorzuschlagen, welche die Sicherheit der Fahrzeuginsassen durch eine erhöhte Fähigkeit zur Lastaufnahme der Unterbaustruktur, insbesondere beim Aufprall von hinten auf das Fahrzeug, verbessert. Ein weiteres Ziel der Erfindung ist es, ein heckseitiges Aufprallbegrenzungssystem für ein Fahrzeug vorzuschlagen, das unter Einbeziehung der erfindungsgemäßen Unterbaustruktur zum Überwinden der oben diskutierten Nachteile des Standes der Technik beiträgt, und insbesondere wenig Bauraum beansprucht.

Diese Aufgabe wird gelöst durch die heckseitige Unterbaustruktur mit den Merkmalen des Anspruchs 1 sowie durch das heckseitige Aufprallbegrenzungssystem mit den Merkmalen des Anspruchs 9.

Die vorliegende Erfindung schlägt dementsprechend eine heckseitige Unterbaustruktur für ein Kraftfahrzeug vor, die zusätzlich zu den links- und rechtsseitig angeordneten Längsträgern einen sich in Fahrzeuglängsrichtung erstreckenden dritten Längsträger aufweist, wobei sich dieser dritte Längsträger bis zum Heckende des Fahrzeugs erstreckt, wobei sich gegen die heckseitigen Enden der Längsträger Crashboxen, Energieabsorptionselemente oder dergleichen abstützen, gegen welche sich ein Bumperquerträger ein Stoßfänger, ein Monoblocksystem oder dergleichen abstützt.

Diese erstmals vorgeschlagene heckseitige Unterbaustruktur bietet gegenüber der herkömmlichen Unterbaustruktur mit zwei Längsträgern den Vorteil, dass sich die bspw. beim Aufprall auf das Fahrzeug von hinten aufzunehmende Last auf drei, statt wie bislang auf zwei Träger verteilt. Diese neuartige und zugleich gleichmäßigere Lasteinleitung führt dazu, dass das Fahrzeug, und insbesondere die Fahrgastzelle, eine wesentlich geringere Verformung erfährt und die Insassen einer geringen Gefährdung beim Aufprall ausgesetzt sind.

Ein weiterer Vorteil der erfindungsgemäßen Unterbaustruktur besteht darin, dass auch Fahrzeuge mit herkömmlichem Heckkofferraum mit der erfindungsgemäßen Unterbaustruktur ausgestattet werden können und dadurch den Fahrzeuginsassen beim Auffahrunfall mehr Sicherheit gewähren.

Ferner kann bei Verwendung der erfindungsgemäßen Unterbaustruktur ein vorhandener Heckkofferraum kürzer gestaltet werden als bei demselben Fahrzeug mit herkömmlicher Unterbaustruktur, ohne hierdurch an Sicherheit für die Fahrgäste einzubüßen. Auch ein aus Designgründen verringerter Bumperüberhang oder ein möglichst schlank bauendes Aufprallbegrenzungssystem ist verglichen mit der herkömmlichen Unterbaustruktur bei Verwendung der erfindungsgemäßen Unterbaustruktur bei gleicher oder sogar erhöhter Fahrzeugsicherheit möglich.

Nicht zuletzt liegt ein Vorteil der erfindungsgemäßen Unterbaustruktur auch darin, dass die beiden äußeren Längsträger der Unterbaustruktur unter Gewährung derselben wie bislang allein mit zwei Längsträgern erzielten Insassensicherheit leichter, schlanker, und kostengünstiger herstellbar sind. Dies beruht u. a. darauf, dass die verbesserte Lasteinleitung ins Fahrzeugheck das in einen der beiden äußeren Längsträger eingeleitete Lastniveau auf einen Wert von maximal 60 % des ursprünglichen Lastniveaus begrenzt. Zudem können die Längsträger auch deshalb kosten- und gewichtseinsparend hergestellt werden, da sie bei der erfindungsgemäßen Unterbaustruktur nicht mehr wie üblich verstärkt werden müssen, aufgrund dieses verminderten Lastniveaus, das beim Aufprall in die äußeren Längsträger eingeleitet wird.

Ein nicht zu unterschätzender Vorteil ist das ungleich bessere Abschneiden der mit der erfindungsgemäßen Unterbaustruktur ausgestatteten Fahrzeuge bei Testergebnissen bspw. im sog. Dannertest (dieser legt eine Aufprallgeschwindigkeit von 16 km/h bei 40 % Fahrzeugüberdeckung fest). Diese Sicherheitsüberprüfungen tragen maßgeblich zur Versicherungseinstufung des Fahrzeugs bei. Das Ergebnis dieser Überprüfungen fließt in die Bemessung der Prämie ein, die etwa ein Verkehrsteilnehmer bei der Versicherungseinstufung für sein Fahrzeug zu zahlen hat. Mittels der erfindungsgemäßen Unterbaustruktur lässt sich die Versicherungseinstufung eines solchen Fahrzeugs verbessern und mithin sogar die vom Halter zu zahlende Versicherungsprämie senken.

Ein weiterer Vorteil der erfindungsgemäßen Erfindung besteht darin, dass aufgrund der besseren und gleichmäßigeren Lasteinleitung eine geringere und zugleich gleichmäßigere Lasteinleitung bei Aufprall von hinten erzielt wird. Dies wiederum reduziert den Deformationsweg und die Anzahl der beschädigten Bauteile. Letzteres ist vor allem bei leichten Auffahrunfällen, wie sie sich z. B. beim Einparken ergeben können, von großem Interesse: Die Reparatur- und Austauscharbeiten an Fahrzeugbauteilen können wesentlich weniger aufwändig stattfinden. Auf ähnliche Art ist die Tatsache von Vorteil, dass der Bumperquerträger weniger stark nach vorne durchpendelt. Auch dies führt zu geringer Beschädigung des Fahrzeugs bei leichteren Unfällen und erspart Kosten bei der Reparatur der Schäden.

Vorteilhaft ist bei Verwendung der erfindungsgemäßen Unterbaustruktur, dass die äußeren Längsträger der Unterbaustruktur weniger stark querkraftbelastet sind, als dies bei der herkömmlichen Unterbaustruktur der Fall ist. Eine leichtere Gestaltung der Längsträger ist daher ebenso möglich wie eine kostengünstigere Herstellung, verglichen mit der herkömmlichen Unterbaustruktur.

Diese neue Lasteinleitung leitet beim Aufprall weniger Last in die äußeren Längsträger ein und erlaubt es damit, die Profilquerschnitte der äußeren Längsträger weniger stark anheben zu müssen, um eine optimale Lasteinleitung bzw. Energieabsorption zu erzielen. Hierdurch verbleibt Bauraum, der bspw. zum Lösen von Packageproblemen oder zur komfortablen Ausgestaltung hinterer Sitzreihen genutzt werden kann.

Ebenfalls von Vorteil ist die Tatsache, dass bei Verwendung der erfindungsgemäßen Unterbaustruktur ein Aufprallbegrenzungssystem wie z. B. der Stoßfängerquerträger des Fahrzeugs leichter, schlanker, weniger aufwändig und somit auch kostengünstiger ausgebildet werden kann, da der Stoßfängerquerträger aufgrund der Abstützung durch den dritten Längsträger eine geringere Biege- und Torsionssteifigkeit aufweisen darf, ohne Sicherheitseinbußen befürchten zu müssen.

Neben den genannten Vorteilen ist es nunmehr auch möglich, an der Unterseite des Fahrzeugs, sei es unterhalb der Fahrgastzelle, sei es innerhalb der Fahrgastzelle, Gegenstände oder Vorrichtungen sicherer am stabilen mittleren Längsträger zu befestigen, als dies bei einer herkömmlichen Unterbaustruktur ohne dritten Längsträger möglich ist.

Zur vorteilhaften Erhöhung des Energieabsorptionsvermögens der erfindungsgemäßen Unterbaustruktur stützen sich Crashboxen, Energieabsorptionselemente, Halter oder dgl. gegen die heckseitigen Enden der Längsträger ab. Neben der Unterbaustruktur selbst dienen diese Crashboxen, Energieabsorptionselemente, Halter oder dgl., bei denen es sich um handelsübliche Bauelemente handeln kann, nicht aber handeln muß, ebenfalls der Energieaufnahme im Falle eines Aufprall von hinten. Aufgrund ihrer Bauweise sowie der Wahl ihres Materials eignen sie sich vorzüglich zur Lastaufnahme beim Heckaufprall.

Bei Verwendung der erfindungsgemäßen Unterbaustruktur stehen anders als üblich nicht nur zwei, sondern drei stabile Längsträger zum Abstützen dieser o. g. Elemente zur Verfügung. Diese dritte Abstützmöglichkeit erhöht die insgesamt mögliche Lastaufnahme erheblich und bringt einerseits wiederum den Vorteil mit sich, dass die Sicherheit der Fahrzeuginsassen erhöht wird, das Fahrzeug in geringerem Maße beschädigt oder verformt wird, eine geringer Anzahl an Teilen bei leichteren Unfällen deformiert und ausgetauscht werden müssen und somit Kosten eingespart werden können.

Andererseits besteht ein Vorteil darin, dass bei derselben angestrebten Sicherheit des Fahrzeugs dieses vermehrt Designwünschen oder Marketingüberlegungen folgend gestaltet werden kann. So können bei Verwendung der erfindungsgemäßen Unterbaustruktur Fahrzeuge mit bspw. kürzerem Heckkofferraum, ohne Heckkofferraum, steil oder gar senkrecht angeordneter Heckklappe oder kürzerem Bumperüberstand gebaut werden, ohne an Sicherheit einzubüßen.

Die genannten Vorteile können noch verstärkt werden, wenn sich gegen die Crashboxen, Energieabsorptionselemente, Halter oder dgl. ein Bumperquerträger, ein Stoßfänger, ein Monoblocksystem oder dgl. abstützt. Hierbei liegt der große Vorteil darin, dass diese besagte Abstützung nicht mehr nur auf zwei, sondern auf drei Längsträger vorgenommen werden kann. Die hieraus resultierenden Vorteile und Synergieeffekte wurden weiter oben bereits diskutiert.

So wird der dritte Längsträger der Unterbaustruktur mittig zwischen den beiden äußeren Längsträgern angeordnet. Dies bietet den Vorteil, dass sich die Lastaufnahme beispielsweise im Aufprall mit voller Überdeckung der betroffenen Fahrzeuge gleichmäßig gemindert durch den mittleren Längsträger auf die beiden äußeren Längsträger verteilt. Somit kann sichergestellt werden, dass keine Seite der hinteren Sitzbank bzw. Sitzreihe beim Auffahrunfall von hinten stärker gefährdet ist.

Vorteilhafte Weiterbildungen der Erfindung ergeben sich aus den Merkmalen der Unteransprüche.

In einer weiteren bevorzugten Ausführungsform erstreckt sich der dritte Längsträger von einem dem Getriebetunnel oder der Hinterachse benachbarten Bereich aus bis zum Heckende. Vorteilhaft ist hierbei, dass der dritte Längsträger auf diese Weise über eine möglichst lange Strecke beispielsweise am Unterboden abgestützt werden kann und somit über eine vergleichsweise große Fläche Kräfte, wie sie etwa beim Aufprall auf das Heck auftreten, ableiten kann. Durch diese Ausführungsform wird beim heckseitigen Aufprall somit ein größerer Teil der vor allem hinteren Fahrzeugkarosserie an der Energieabsorption beteiligt.

Entsprechend einer weiteren bevorzugten Ausführungsform ist der dritte Längsträger der Unterbaustruktur gegen den Getriebetunnel oder gegen den Unterboden im Bereich der Hinterachse abgestützt. Im ersten Fall bietet dies einen Vorteil dahingehend, dass beim Abstützen des dritten Trägers, reicht er in Fahrtrichtung bis in einen der genannten Bereiche heran, neben dem Unterbodenblech des Fahrzeugs auch auf stabilere Strukturen zurückgegriffen werden kann. Die durch den dritten Längsträger beim Aufprallereignis aufgenommene Kraft kann somit in die stabilen Strukturen des Getriebetunnels oder der Hinterachse eingeleitet werden, was nachhaltig zu höherer Lastaufnahme und damit verbesserter Sicherheit führt.

In einer ebenfalls bevorzugten Ausführungsform erstreckt sich der dritte Längsträger unter den Sitzen einer dritten Sitzreihe oder zwischen diesen hindurch. Dabei dient der dritte Längsträger in einer weiteren bevorzugten Ausführungsform zur Abstützung der hinteren Sitzreihen. Diese Abstützung ist deshalb vorteilhaft, da die Sitzreihe nunmehr unter ihrer Mitte auf einem Träger abgestützt werden kann. Dies erlaubt in diesem Bereich der Fahrgastzelle Sitzreihen mit getrennten Sitzen, das sicherere Anbringen von Gepäcknetzen, Transportsicherungen oder dergleichen an der Fahrzeugkarosserie sowie eine flexiblere Raumausnutzung, insbesondere im über dem dritten Längsträger gelegenen Bereich der Fahrgastzelle.

In einer weiteren bevorzugten Ausführungsform ist ein Querträger im Übergangsbereich vom Getriebetunnel zum dritten Längsträger angeordnet, gegen den sich alle drei Längsträger abstützen. Hierbei ist von Vorteil, dass der linke und der rechte Längsträger nicht über ihre gesamte Länge einstückig sein müssen, sondern sich bis zum Querträger im Übergangsbereich vom Getriebetunnel zum dritten Längsträger und sich ab diesem durch zweite, hintere Längsträgerteile bzw. -abschnitte bis zum Heckende erstrecken können. Diese hinteren Längsträgerteile können bei deren Beschädigung jeweils leicht und unabhängig vom vorderen Teil ausgetauscht werden. Ebenso kann der hintere Längsträgerteil in Abhängigkeit von den unterschiedlichen Belastungen, denen der vor dem Querträger gelegene Teil und der hinter dem Querträger gelegene Teil ausgesetzt sind, ein anderes Profil oder Material als der vordere Teil aufweisen. Vorteilhaft ist hierbei auch, dass diese erstmals mögliche Zweiteilung der Längsträger einen vorderen, über Modelle des Fahrzeugherstellers hinweg gleichbleibend gestalteten Teillängsträger und einen dem jeweiligen Modell angepassten hinteren Teil des Längsträger ermöglicht. Diese Gestaltung erlaubt eine kostengünstige Produktion des vorderen Teils in hoher Stückzahl über eine Mehrzahl von Modellen hinweg, was zu Einsparungen bei Logistik und Lagerung führt. Von großem Vorteil ist ebenfalls die zusätzliche Querversteifung, die das Fahrzeug durch den Querträger erfährt. Durch diesen Querträger erhöht sich die Sicherheit des Fahrzeugs bspw. bei Aufprallen eines anderen Fahrzeugs in die Fahrzeugseite in beachtlichem Maße.

Entsprechend einer weiteren bevorzugten Ausführungsform ist ein weiterer Querträger im Bereich der heckseitigen Hälfte des dritten Längsträgers unter den Sitzen einer dritten Sitzreihe angeordnet, gegen den sich alle drei Längsträger abstützen. Der hiermit verbundene Vorteil besteht u. a. in der zusätzliche Versteifung des Fahrzeug als Schutzvorkehrung für den Fall eines Unfalls mit seitlichem Aufprall auf das Fahrzeug. So steift der weitere Querträger den Unterbau zusätzlich aus, führt damit zu einer verbesserten Sicherheit für die Insassen des Fahrzeugs und trägt mit dazu bei, dass die Fahrgastzelle einen Seitenaufprall möglichst unbeschädigt übersteht.

Eine weitere bevorzugte Ausführungsform ist **dadurch gekennzeichnet, dass** der dritte Längsträger zur Abstützung einer Anhängekupplung dient. Vorteilhaft ist an dieser Ausführungsform, dass für die Abstützung einer Anhängekupplung erstmals ein fester Träger zur Verfügung steht, in dessen unmittelbarer Verlängerung der Anhänger auf geradem Kraftübertragungsweg kraftschlüssig angehängt werden kann. Dieser gerade Kraftübertragungsweg aber führt zur vorteilhaften Vereinfachung der Konstruktion der Befestigung der Anhängekupplung und somit zur Kosteneinsparung und Erleichterung der Herstellung.

Zur Lösung der vorstehenden Aufgabe wird ferner ein heckseitiges Aufprallbegrenzungssystem für ein Kraftfahrzeug mit einer Stoßabsorptionsvorrichtung gemäß dem Oberbegriff des Anspruchs 10 vorgeschlagen, welches dadurch gekennzeichnet ist, dass der rückwärtige Bumperquerträger, Stoßfänger oder das rückwärtige Monoblocksystem zusätzlich vermittels einer mittig angeordneten, dritten Crashbox, einem dritten Energieabsorptionselement, einem dritten Halter oder dergleichen gegen die erfindungsgemäße heckseitige Unterbaustruktur abgestützt ist. Damit werden auch in Bezug auf das heckseitige Aufprallbegrenzungssystem die vorstehend zur heckseitigen Unterbaustruktur diskutierten Vorteile ungeschmälert erzielt. In einer weiteren, bevorzugten Ausführungsform ist vorgesehen, dass sich die dritte Crashbox, das dritte Energieabsorptionselement, der dritte Halter oder dergleichen in Fahrzeuglängsrichtung am Heckende gegen das heckseitige Ende des dritten Längsträgers der heckseitigen Unterbaustruktur abstützt. Hierdurch ergeben sich in analoger Weise die vorstehend diskutierten Vorteile und Synergieeffekte.

Die Erfindung wird in nachfolgenden Ausführungsbeispielen anhand der Figuren der Zeichnung näher erläutert. Es zeigt:
- Fig. 1: eine schematische vereinfachte Drauf- sicht auf eine herkömmliche Unterbau- struktur eines Fahrzeugs;
- Fig. 2: eine schematisch vereinfachte Drauf- sicht auf eine erfindungsgemäße Un- terbaustruktur für ein Fahrzeug;
- Fig. 3: eine schematisch vereinfachte Drauf- sicht auf einen hinteren Abschnitt eines Fahrzeugs mit einer weiteren Variante einer erfindungsgemäßen Un- terbaustruktur;
- Fig. 4: eine schematisch vereinfachte Ansicht eines hinteren Abschnitts eines Fahr- zeugs mit einer weiteren Variante ei- ner erfindungsgemäßen Unterbaustruk- tur von unten; und
- Fig. 5: eine schematisch vereinfachte Drauf- sicht eines hinteren Abschnitts eines Fahrzeugs mit einer weiteren Variante eines erfindungsgemäßen Unterbau- struktur.

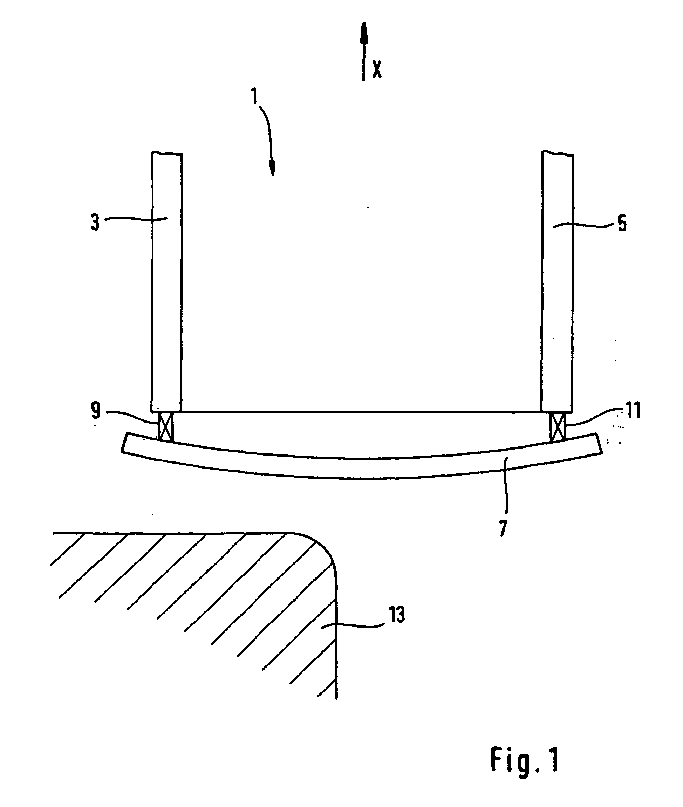

Fig. 1 zeigt eine herkömmliche Unterbaustruktur 1. Diese Unterbaustruktur 1 weist einen in Fahrtrichtung X des Fahrzeugs ausgerichteten linken Hinterrahmen bzw. Längsträger 3, einen in Fahrtrichtung X ausgerichteten rechten Hinterrahmen bzw. Längsträger 5, einen Bumperquerträger 7 sowie zwei zwischen dem linken Längsträger 3 bzw. dem rechten Längsträger 5 und dem Bumperquerträger 7 in Verlängerung der Längsträger 3, 5 eingefügte Crashboxen 9 und 11 auf. In der Praxis sind auch andere Ausführungen dieser herkömmlichen Unterbaustruktur mit Energieabsorptionselementen, Haltern oder dergleichen anstelle der Crashboxen 9 und 11 üblich. Fig. 1 zeigt ferner den Anschnitt eines Barrierenrammwagens 13, wie er im sog. Dannertest verwendet wird, um ein Auffahrereignis von hinten auf das zu testende Fahrzeug zu simulieren. Die Position des Barrierenrammwagens 13 relativ zur Unterbaustruktur 1 mit einer Überlappung von etwa 40 % entspricht einer der häufigsten Stellungen eines auffahrenden Fahrzeugs auf ein vorausfahrendes Fahrzeug. Entsprechend der räumlichen Orientierung des Barrierenrammwagens 13 zur Unterbaustruktur 1 hat der linke Längsträger 3 im Falle eines Aufpralls den größten Teil der eingeleiteten

Last zu tragen, wohingegen der rechte Längsträger 5 mit einer wesentlich geringeren Last beaufschlagt wird. Untersuchungen haben ergeben, dass der linke Längsträger 3 bis zu 90% der eingeleiten Last aufnehmen muss.

In den folgenden Figuren sind Bauteile, die jenen aus Fig. 1 entsprechen oder aber ähnlich wirken, zur besseren Verständlichkeit ebenfalls mit den in Fig. 1 verwendeten Bezugszeichen bezeichnet.

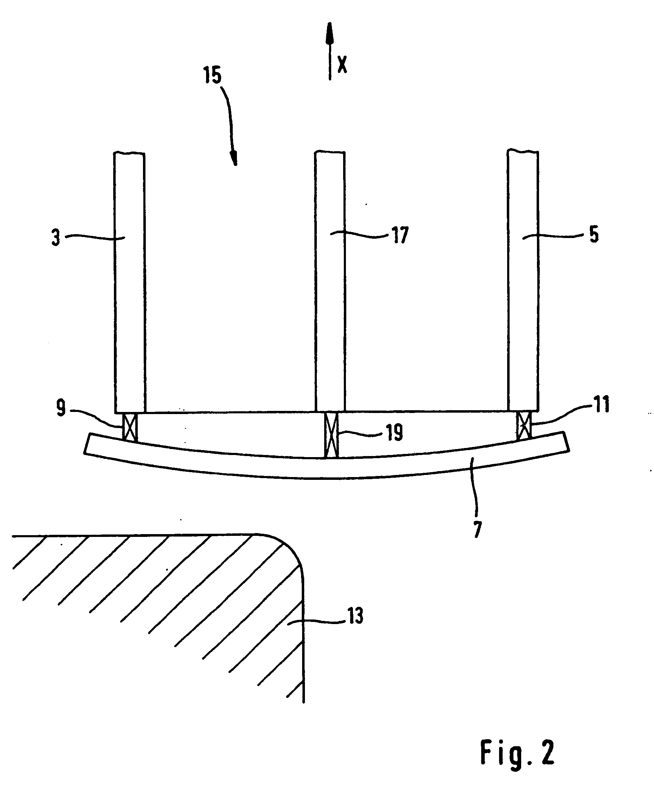

In Fig. 2 ist - schematisch vereinfacht - eine beispielhafte Ausführungsform einer erfindungsgemäßen Unterbaustruktur 15 dargestellt. Die erfindungsgemäße Unterbaustruktur 15 weist einen linken Längsträger 3, einen rechten Längsträger 5, einen Bumperquerträger 7 sowie Crashboxen 9 und 11 auf. Zusätzlich weist die erfindungsgemäße Unterbaustruktur 15 einen in Längsrichtung X orientierten dritten Längsträger 17 auf, welcher zwischen dem linken Längsträger 3 und dem rechten Längsträger 5 angeordnet ist. Ferner weist die erfindungsgemäße Unterbaustruktur 15 eine dritte, in Verlängerung des mittleren Längsträgers 17 angeordnete Crashbox 19 auf, die sich vom heckseitigen Ende des mittleren Längsträgers 17 bis an den Bumperquerträger 7 heran erstreckt. Somit weist die erfindungsgemäße heckseitige Unterbaustruktur 15 insgesamt drei Längsträger 3, 17, 5 auf, an deren heckseitigen Enden sich jeweils eine Crashbox 9, 19, 11 abstützt, an denen wiederum der Bumperquerträger 7 montiert ist.

Wie schon bei der Diskussion von Fig. 1 erwähnt, können auch bei der in Fig. 2 gezeigten erfindungsgemäßen Unterbaustruktur 15 die Crashboxen 9, 19, 11 durch Energieabsorptionselemente, Halter oder dergleichen ersetzt werden. Auch eine Kombination von Crashboxen, Energieabsorptionselementen oder Haltern oder dergleichen mit jeweils einem der anderen genannten Elementen ist denkbar.

In Fig. 2 ist ebenfalls der Anschnitt des Barrierenrammwagens 13 in einer typischen räumlichen Beziehung zur Unterbaustruktur 15 dargestellt, wie sie ein auffahrendes Fahrzeug in Bezug auf ein vorausfahrendes Fahrzeug typischerweise unmittelbar vor dem Aufprall einnimmt. Beim Aufprall etwa des Barrierenrammwagen 13 beispielsweise im Rahmen eines Dannertests muß der linke Längsträger 3 der erfindungsgemäßen Unterbaustruktur 15 anders als bei herkömmlichen Unterbaustrukturen nur mehr etwa 60 % der eingeleiteten Last aufnehmen, der zusätzlichen dritte Längsträger 17 übernimmt vorteilhaft hierbei etwa 40 % der eingeleiteten Last.

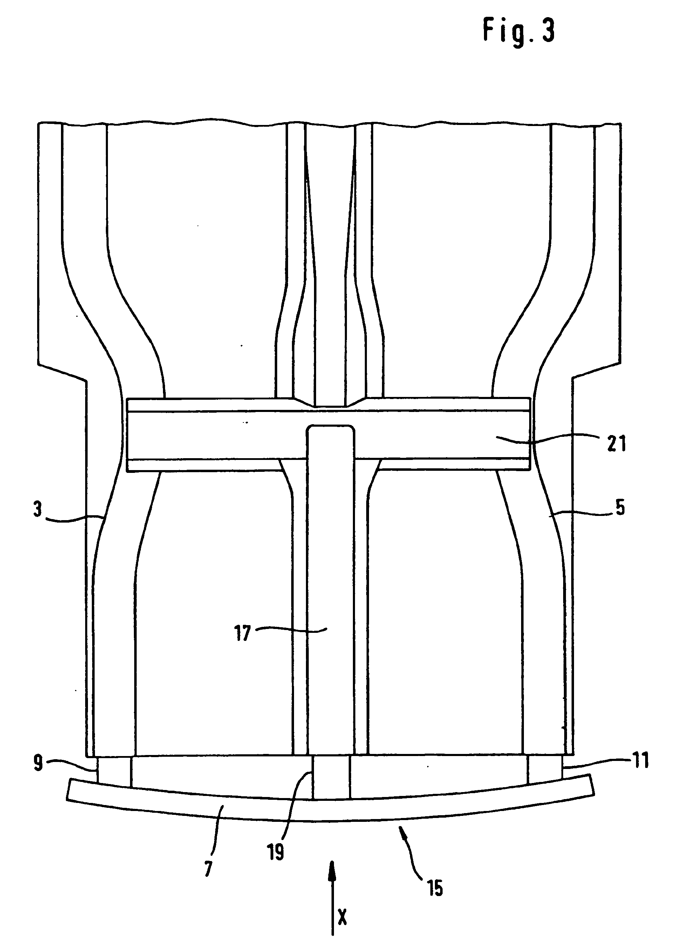

Fig. 3 zeigt eine schematisch vereinfachte Draufsicht auf einen freigelegten Unterbau eines Fahrzeugs mit integrierter erfindungsgemäßer heckseitiger Unterbaustruktur 15. Bei der in Fig. 3 gezeigten erfindungsgemäßen Unterbaustruktur 15 ist ein zusätzlicher Querträger 21 zu erkennen, der sich vom linken Längsträger 3 bis zum rechten Längsträger 5 in Fahrzeugquerrichtung und somit quer zur Fahrtrichtung x erstreckt. Auf diesen Querträger 21 ist der mittlere Längsträger 17 abgestützt.

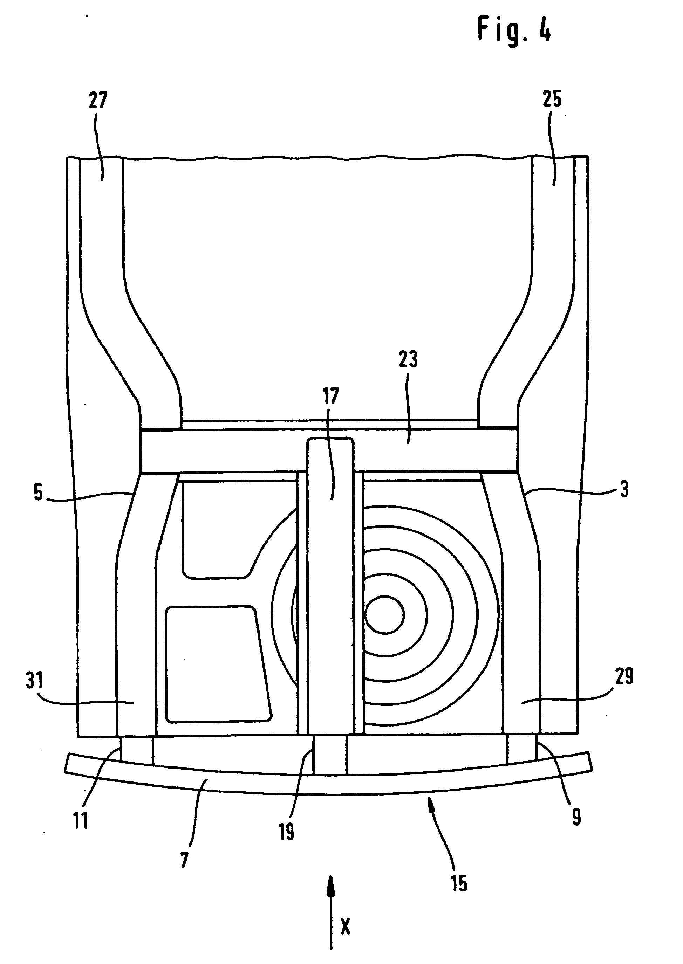

Fig. 4 zeigt ein Fahrzeug mit integrierter erfindungsgemäßer heckseitiger Unterbaustruktur 15 in vereinfachter Darstellung von unten. Dargestellt ist wiederum ein Querträger 23, der sich quer zur Fahrtrichtung vom linken Längsträger 3 bis zum rechten Längsträger 5 erstreckt. In der in Fig. 4 gezeigten Ausführungsform sind der linke Längsträger 3 als auch der rechte Längsträger 5 derart zweiteilig ausgebildet, dass sich ein vorderer Abschnitt 25 des linken Längsträgers 3 sowie ein vorderer Abschnitt 27 des rechten Längsträgers 3 vom jeweils vorderen, in Fahrtrichtung X vor dem Querträger 23 im vorderen Fahrzeugteil liegenden Längsträgerendes bis an den Querträger 23 jeweils heran erstreckt und sich dort an diesem abstützt. Hinter dem Querträger 23 beginnen der hintere Abschnitt 29 des linken Längsträgers 3 sowie der hintere Abschnitt 31 des rechten Längsträgers 5. Beide hinteren Abschnitte 29, 31 des linken Längsträgers 3 bzw. des rechten Längsträgers 5 stützen sich am Querträger 23 ab und erstrecken sich in Fahrzeuglängsrichtung bis zum Heckende.

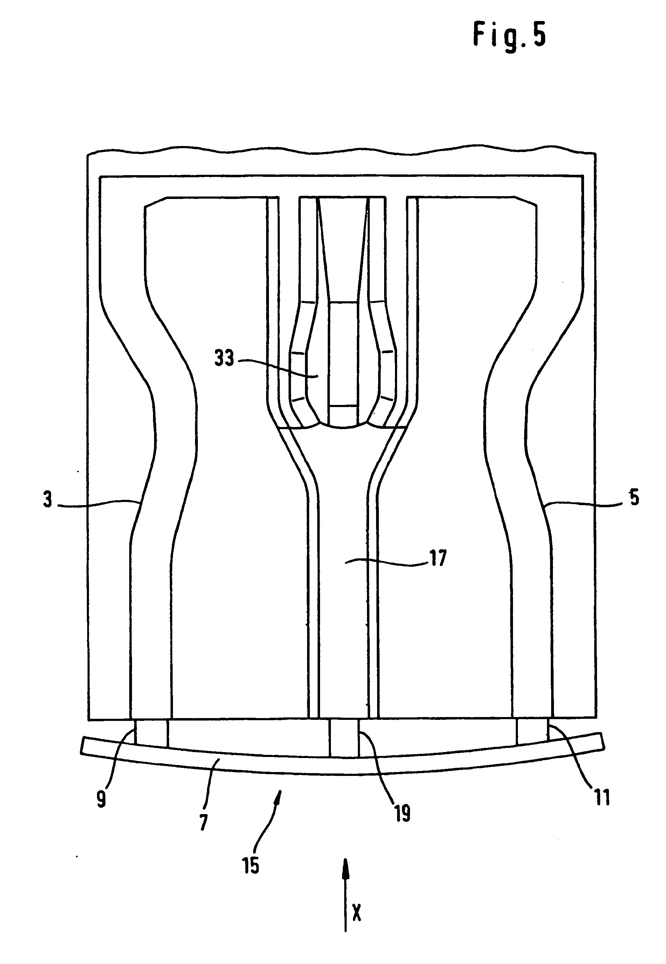

Fig. 5 zeigt eine weitere vereinfachte schematische Darstellung eines hinteren Fahrzeugunterteils mit integrierter erfindungsgemäßer heckseitiger Unterbaustruktur 15. Die in Fig. 5 gezeigte erfindungsgemäße Unterbaustruktur 15 weist wiederum einen linken Längsträger 3, einen rechten Längsträger 5, einen Bumperquerträger 7, Crashboxen 9, 19 und 11 sowie einen mittleren Längsträger 17 auf. In der in Fig. 5 gezeigten Ausführungsform stützt sich der mittlere Längsträger 17 an einem Getriebetunnel 33 ab. Die im Falle eines Aufpralls von hinten auf das Fahrzeug einzuleitende Last wird daher über den Bumperquerträger 7 und die Crashboxen 9, 19, 11 auf die Längsträger 3, 17, 5 übertragen. Da sich in der hier gezeigten Ausführungsform der mittlere Längsträger 17 am Getriebetunnel 33 abstützt, kann über ihn eine ungleich höhere Last eingeleitet werden.

Die vorstehende Erfindung schafft somit erstmals eine heckseitige Unterbaustruktur für ein Fahrzeug mit einem dritten, zwischen zwei äußeren Längsträgern angeordneten Längsträger, der sich bis zum Heckende des Fahrzeugs erstreckt. Ferner schlägt die vorliegende Erfindung vor, den dritten Längsträger mittig zwischen den beiden äußeren Längsträgern anzuordnen.

### Bezugszeichenliste

- 1: Unterbaustruktur
- 3: Linker Längsträger
- 5: Rechter Längsträger
- 7: Bumperquerträger
- 9: Crashbox
- 11: Crashbox
- 13: Crashbox
- 15: Erfindungsg. Unterbaustruktur
- 17: Mittlerer Längsträger
- 19: Crashbox
- 21: Querträger
- 23: Querträger
- 25: Vorderer Abschnitt
- 27: Vorderer Abschnitt
- 29: Hinterer Abschnitt
- 31: Hinterer Abschnitt
- 33: Getriebetunnel

## Patentansprüche

1. Heckseitige Unterbaustruktur (15) für ein Kraftfahrzeug, insbesondere für eine einen Personenwagen, wie z. B. eine Großraumlimousine, ein Van, ein Sport Utility Fahrzeug, ein Kombi oder dergleichen, mit zwei heckseitigen in Fahrzeuglängsrichtung X jeweils links und rechts angeordneten Längsträgern (3, 5), wobei die Unterbaustruktur (15) heckseitig einen in Fahrzeuglängsrichtung X, zwischen den beiden äußeren Längsträgern (3, 5) mittig angeordneten dritten Längsträger (17) aufweist, der sich bis zum Heckende erstreckt, **dadurch gekennzeichnet, dass** sich gegen die heckseitigen Enden der Längsträger (3, 17, 5) Crashboxen (9, 19, 11), Energieabsorptionselemente oder dergleichen abstützen, gegen welche sich ein Bumperquerträger (7), ein Stoßfänger, ein Monoblocksystem oder dergleichen abstützt.

2. Heckseitige Unterbaustruktur nach Anspruch 1, **dadurch gekennzeichnet, dass** der dritte Längsträger (17) mittig zwischen den beiden äußeren Längsträgern (3, 5) angeordnet ist.

3. Heckseitige Unterbaustruktur nach Anspruch 1 oder 2, **dadurch gekennzeichnet, dass** der dritte Längsträger (17) sich von einem dem Getriebetunnel (33) oder der Hinterachse benachbarten Bereich erstreckt.

4. Heckseitige Unterbaustruktur nach einem der Ansprüche 1 bis 3, **dadurch gekennzeichnet, dass** sich der dritte Längsträger (17) gegen den Getriebetunnel (33) oder gegen den Unterboden im Bereich der Hinterachse abstützt.

5. Heckseitige Unterbaustruktur nach einem der Ansprüche 1 bis 4, **dadurch gekennzeichnet, dass** sich der dritte Längsträger (17) unter den Sitzen einer dritten Sitzreihe oder zwischen diesen hindurch erstreckt.

6. Heckseitige Unterbaustruktur nach einem der Ansprüche 1 bis 5, **dadurch gekennzeichnet, dass** der dritte Längsträger (17) zur Abstützung der hinteren Sitzreihen dient.

7. Heckseitige Unterbaustruktur nach einem der Ansprüche 1 bis 6, **dadurch gekennzeichnet, dass** ein Querträger (21) im Übergangsbereich vom Getriebetunnel (33) zum dritten Längsträger (17) angeordnet ist, gegen den sich alle drei Längsträger (3, 17, 5) abstützen.

8. Heckseitige Unterbaustruktur nach einem der Ansprüche 1 bis 7, **dadurch gekennzeichnet, dass** ein weiterer Querträger (23) im Bereich der heckseitigen Hälfte des dritten Längsträgers (17) unter den Sitzen einer dritten Sitzreihe angeordnet ist, gegen den sich alle drei Längsträger (3, 17, 5) abstützen.

9. Heckseitige Unterbaustruktur nach einem der Ansprüche 1 bis 8, **dadurch gekennzeichnet, dass** der dritte Längsträger (17) zur Abstützung einer Anhängekupplung dient.

10. Heckseitiges Aufprallbegrenzungssystem für ein Kraftfahrzeug, insbesondere für einen Personenwagen, wie z. B. eine Großraumlimousine, ein Van, ein Sport Utility Fahrzeug, ein Kombi oder dergleichen, mit einem Bumperquerträger (7) oder Stoßfänger mit zwei Crashboxen (9, 11) oder dergleichen zur Abstützung gegen jeweils einen in Fahrzeuglängsrichtung X seitlich links oder rechts angeordneten Längsträger (3, 5) einer Unterbaustruktur (15), **dadurch gekennzeichnet, dass** der rückwärtige Bumperquerträger (7) oder Stoßfänger oder das rückwärtige Monoblocksystem zusätzlich vermittels einer mittig angeordneten, dritten Crashbox (19), einem dritten Energieabsorptionselement, einem dritten Halter oder dergleichen gegen die heckseitige Unterbaustruktur (15), nach einem der Ansprüche 1 bis 11, des Kraftfahrzeugs abgestützt ist.

11. Heckseitiges Aufprallbegrenzungssystem nach Anspruch 10, **dadurch gekennzeichnet, dass** sich die dritte Crashbox (19), das dritte Energieabsorptionselement, der dritte Halter oder dergleichen in Fahrzeuglängsrichtung X am Heckende gegen das heckseitige Ende des dritten Längsträgers (17) der heckseitigen Unterbaustruktur (15) abstützt.

## Claims

1. A rear substructure (15) for a motor vehicle, especially a passenger car such as a people carrier, a van, a sports utility vehicle, an estate car or the like, comprising two rear longitudinal supports (3, 5) arranged to the left and right side in the longitudinal direction X of the vehicle, with the substructure (15) comprising a third longitudinal support (17) in the rear in the longitudinal direction X of the vehicle, which third longitudinal support (17) is arranged centrally between the two outer longitudinal supports (3, 5) and extends up to the rear end, **characterized in that** crash boxes (9, 19, 11), energy absorption elements or the like rest on the rear-side ends of the longitudinal supports (3, 17, 5), against which rest a bumper crossbeam (7), a bumper, a monoblock system or the like.

2. A rear substructure according to claim 1, **characterized in that** the third longitudinal support (17) is arranged centrally between the two outer longitudinal supports (3, 5).

3. A rear substructure according to claim 1 or 2, **characterized in that** the third longitudinal support (17) extends from a region adjacent to the transmission tunnel (33) or the rear axle.

4. A rear substructure according to one of the claims 1 to 3, **characterized in that** the third longitudinal support (17) rests on the transmission tunnel (33) or the underbody in the region of the rear axle.

5. A rear substructure according to one of the claims 1 to 4, **characterized in that** the third longitudinal support (17) extends beneath the seats of a third row of seats or between the same.

6. A rear substructure according to one of the claims 1 to 5, **characterized in that** the third longitudinal support (17) is used for supporting the rear rows of seats.

7. A rear substructure according to one of the claims 1 to 6, **characterized in that** a crossbeam (21) is arranged in the transitional region from the transmission tunnel (33) to the third longitudinal support (17), with all three longitudinal supports (3, 17, 5) resting on said crossbeam.

8. A rear substructure according to one of the claims 1 to 7, **characterized in that** a further crossbeam (23) is arranged in the rear-side half of the third longitudinal support (17) beneath the seats of a third row of seats, with all three longitudinal supports (3, 17, 5) resting on said further crossbeam.

9. A rear substructure according to one of the claims 1 to 8, **characterized in that** the third longitudinal support (17) is used for supporting a hitch.

10. A rear impact-limiting system for a motor vehicle, especially a passenger car such as a people carrier, a van, a sports utility vehicle, an estate car or the like, comprising a bumper crossbeam (7) or a bumper with two crash boxes (9, 11) or the like for support against one longitudinal support (3, 5) each of a substructure (15), which supports (3, 5) are arranged in the longitudinal direction X of the vehicle laterally to the left or right, **characterized in that** the rear bumper cross beam (7) or bumper or the rear monoblock system is additionally supported by means of a centrally arranged third crash box (19), a third energy absorption element, a third support or the like against the rear substructure (15) according to one of the claims 1 to 11 of the motor vehicle.

11. A rear impact-limiting system according to claim 10, **characterized in that** the third crash box (19), the third energy absorption element, the third support or the like rests in the longitudinal direction X at the rear end against the rear-side end of the third longitudinal support (17) of the rear substructure (15).

## Revendications

1. Structure de châssis arrière (15) pour un véhicule à moteur, en particulier pour une voiture personnelle, par exemple un monospace, un van, un SUV, un break ou similaire, avec deux longerons (3, 5) arrière disposés à droite et à gauche dans le sens longitudinal X du véhicule, laquelle structure de châssis (15) présente sur l'arrière un troisième longeron (17) disposé au centre entre les deux longerons extérieurs (3, 5) dans le sens longitudinal X du véhicule et qui s'étend jusqu'à l'extrémité arrière, **caractérisée en ce que** des caissons anticollision (9, 19, 11), des éléments absorbant l'énergie ou similaire s'appuient contre les extrémités arrière des longerons (3, 17, 5) et supportent une traverse de pare-chocs (7), un pare-chocs, un système monobloc ou similaire.

2. Structure de châssis arrière selon la revendication 1, **caractérisée en ce que** le troisième longeron (17) est disposé au centre entre les deux longerons extérieurs (3, 5).

3. Structure de châssis arrière selon la revendication 1 ou 2, **caractérisée en ce que** le troisième longeron (17) s'étend à partir d'une zone voisine du tunnel d'arbre de transmission (33) ou de l'essieu arrière.

4. Structure de châssis arrière selon l'une des revendications 1 à 3, **caractérisée en ce que** le troisième longeron (17) s'appuie contre le tunnel d'arbre de transmission (33) ou contre le bas de caisse au niveau de l'essieu arrière.

5. Structure de châssis arrière selon l'une des revendications 1 à 4, **caractérisée en ce que** le troisième longeron (17) s'étend sous les sièges d'une troisième rangée de sièges ou entre ceux-ci.

6. Structure de châssis arrière selon l'une des revendications 1 à 5, **caractérisée en ce que** le troisième longeron (17) sert à soutenir les rangées de siège arrière.

7. Structure de châssis arrière selon l'une des revendications 1 à 6, **caractérisée en ce qu'**une traverse (21) contre laquelle les trois longerons (3, 17, 5) s'appuient est disposée dans la zone de transition entre le tunnel d'arbre de transmission (33) et le troisième longeron (17).

8. Structure de châssis arrière selon l'une des revendications 1 à 7, **caractérisée en ce qu'**une autre traverse (23) contre laquelle les trois longerons (3, 17, 5) s'appuient est disposée dans la moitié arrière du troisième longeron (17) sous les sièges d'une troisième rangée de sièges.

9. Structure de châssis arrière selon l'une des revendications 1 à 8, **caractérisée en ce que** le troisième longeron (17) sert à soutenir un attelage de remorquage.

10. Système de réduction des impacts arrière pour un véhicule à moteur, en particulier pour une voiture personnelle, par exemple un monospace, un van, un SUV, un break ou similaire, avec une traverse de pare-chocs (7) ou un pare-chocs avec deux caissons anticollision (9, 11) ou similaires destinés à s'appuyer chacun sur un longeron (3, 5) d'une structure de châssis (15) disposé latéralement à droite ou à gauche dans le sens longitudinal X du véhicule, **caractérisé en ce que** la traverse de pare-chocs (7) ou le pare-chocs arrière ou le système monobloc arrière est en outre soutenu, au moyen d'un troisième caisson anticollision (19) disposé au milieu, d'un troisième élément absorbant l'énergie, d'une troisième fixation ou similaire, contre la structure de châssis arrière (15) selon l'une des revendications 1 à 11 du véhicule à moteur.

11. Système de réduction des impacts arrière selon la revendication 10, **caractérisé en ce que** le troisième caisson anticollision (19), le troisième élément absorbant l'énergie, la troisième fixation ou similaire s'appuie dans le sens longitudinal X du véhicule à l'extrémité arrière contre l'extrémité arrière du troisième longeron (17) de la structure de châssis (15) arrière.
